# EUROPEAN PATENT SPECIFICATION

(11) **EP 2 562 910 B1**
(45) Date of publication and mention of the grant of the patent: **11.07.2018**
(21) Application number: 11178816.2
(22) Date of filing: 25.08.2011
(51) Int. Cl.: H02J 7/14, F02N 11/08

(54) **Multi battery system for start/stop**
System mit mehreren Batterien für Start/Stopp
Système à plusieurs batteries pour démarrage/arrêt

(43) Date of publication of application: 27.02.2013
(73) Proprietor: Volvo Car Corporation, 40 531 Göteborg (SE)
(72) Inventor: Larsson, Patrik, 43832 Landvetter (SE); Larsson, Torbjörn, 41462 Göteborg (SE); Midholm, Daniel, 41322 Göteborg (SE); Ulmhage, Fredrik, 41320 Göteborg (SE)
(74) Representative: Volvo Car Corporation

(56) References cited:
- EP-A1- 1 340 908
- EP-A1- 2 138 712
- DE-A1- 10 100 889
- DE-A1- 10 248 658
- DE-A1-102007 029 479

## Description

### Technical field

Embodiments herein relate to an arrangement for improving the performance of an electrical system of a vehicle. In particular they relate to an arrangement for improving the performance of an electrical system of a vehicle having an internal combustion engine provided with a start/stop system.

Embodiments herein further relate to a method for improving the performance of an electrical system of a vehicle. In particular they relate to a method for improving the performance of an electrical system of a vehicle having an internal combustion engine provided with a start/stop system.

### Background

So called start/stop systems are becoming increasingly common in vehicles having internal combustion engines. These systems have a proven ability to provide fuel savings, especially during city driving. This is due to a shutoff of the internal combustion engine when not required to propel the vehicle and a restart thereof once required again.

However, a problem associated with start/stop systems is that the battery life for traditional lead acid batteries is significantly reduced in start/stop vehicles. Furthermore, traditional lead acid batteries will have to be sized up significantly in order to handle the increased energy throughput from start/stop, in order to be able to fulfill the required battery life.

In order to mitigate this problem some known current start/stop solutions incorporates one large main battery, such as a conventional acid-lead battery, and one smaller size support battery. The support battery in such a known arrangement is arranged to supply the electrical system of the vehicle during warmcranks. These arrengements with support battery are shown, for instance, in DE10248658, DE102007029479 and EP2138712. However, such a known arrangement suffers from some obvious limitations in the case of an increased number of start/stop events, higher timing demands and also increased current consumption by various vehicle systems. The document EP1340908 shows a start/stop system employing a lead acid battery for normal start and a lithium-ion battery, having a higher open circuit voltage, for a restart following idling stop.

### Summary

Embodiments herein aim to provide an improved arrangement for improving the performance of an electrical system of a vehicle having an internal combustion engine provided with a start/stop system.

This is provided by an arrangement the electrical system of which further comprises a primary battery which is selectively connectible to a starter motor for the internal combustion engine via a starter solenoid, an alternator and additional vehicle electrical loads arranged in parallel with each other and selectively connectible in parallel with the primary battery via a first switch, wherein it further comprises a third source of electrical energy having a higher open circuit voltage than the primary battery, which third source of electrical energy is selectively connectible in parallel with the alternator via a second switch.

The provision of a third source of electrical energy such that it is selectively connectible in parallel with the alternator via a second switch ensures supply of the electrical system of the vehicle when an alternator of the vehicle is shut down. The third source of electrical energy may further be charged by the alternator with energy recovered during deceleration.

According to a second aspect in parallel with the alternator is further arranged a DC/DC converter, which DC/DC converter is arranged for selectively charging the third source of electrical energy.

The provision of the DC/DC converter in parallel with the alternator, as described for the second aspect, ensures charging of the third source of electrical energy whereby the power of the charging DC/DC may be low since the main charging for the cycling battery comes from the alternator.

According to a third aspect the third source of electrical energy is a super capacitor.

According to a fourth aspect the third source of electrical energy is a lithium ion battery.

A super capacitor or lithium ion battery, as described for the third or fourth aspect, provides rechargeable sources of electrical energy particularly suited for high energy throughput, and thus significantly reduce the energy throughput on a primary battery, such as a lead acid battery, of a vehicle having an internal combustion engine provided with a start/stop system.

This is also beneficial for the life expectancy of the primary battery.

According to a fifth aspect a secondary battery is arranged in parallel with the alternator.

A secondary battery arranged in parallel with the alternator, as described for the fifth aspect, provides redundancy for the electrical loads of the vehicles, e.g. should an error occur in the circuit comprising the third source of electrical energy.

The method provides for the same advantages as described above for aspects of the arrangement.

### Brief description of the drawings

In the following, embodiments herein will be described in greater detail by way of example only with reference to attached drawings, in which
Fig. 1 is a schematic circuit diagram of a first embodiment of an arrangement for improving the performance of an electrical system of a vehicle having an internal combustion engine provided with a start/stop system.
Fig. 2 is a schematic circuit diagram illustrating an alternative embodiment of an arrangement for improving the performance of an electrical system of a vehicle having an internal combustion engine provided with a start/stop system.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

### Description of embodiments

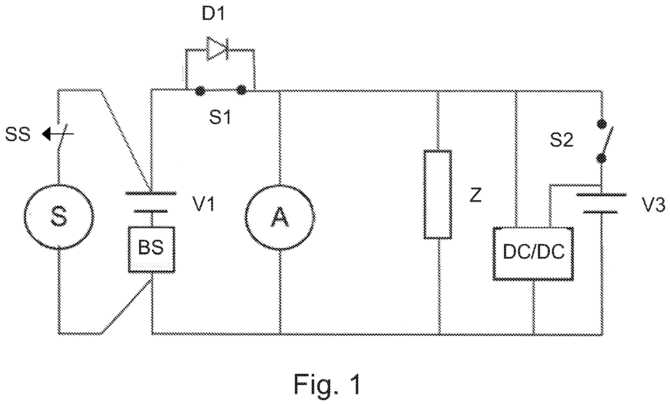

In overview, embodiments herein, as shown schematically in figure 1, relate to an arrangement for improving the performance of an electrical system of a vehicle having an internal combustion engine provided with a start/stop system, the electrical system further comprising a primary battery V1 which is selectively connectible to a starter motor S for the internal combustion engine via a starter solenoid SS, an alternator A and additional vehicle electrical loads Z arranged in parallel with each other and selectively connectible in parallel with the primary battery V1 via a first switch S1.

According to the arrangement of figure 1 in parallel with the alternator A is further arranged a DC/DC converter, which DC/DC converter is arranged for selectively charging a third source of electrical energy V3, which third source of electrical energy V3 is selectively connectible in parallel with the alternator A via a second switch S2.

However, if for example, as the third source of electrical energy V3 a Li-Ion chemistry with suitable voltage characteristics and low internal resistance is used, the DC/DC converter may be removed (not shown). This means that the charging of the third source of electrical energy V3 is done by the alternator A only.

In one embodiment the third source of electrical energy V3 is a super capacitor.

In an alternative embodiment the third source of electrical energy V3 is a lithium ion battery.

Both the super capacitor and the lithium ion battery are suitable for high energy throughput.

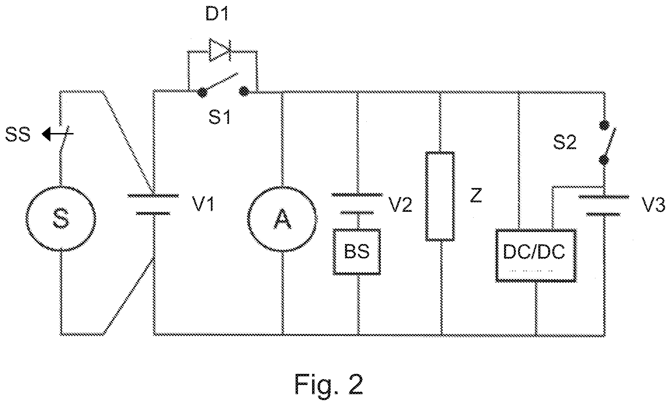

In a yet further embodiment, as illustrated in figure 2, a secondary battery V2 is arranged in parallel with the alternator A.

Thus, the above described embodiments relate to significantly reducing the energy throughput on a primary battery V1, such as a lead acid battery, of a vehicle having an internal combustion engine provided with a start/stop system. As described above this is achieved through using a third source of electrical energy V3, such as a cycling battery, e.g. a Li-ion or a NiMh battery, in parallel with the primary battery V1. The third source of electrical energy V3 is used to supply electrical loads Z of the vehicle when the alternator A of the vehicle is shut down. The third source of electrical energy V3 is charged by the alternator A with energy recovered during deceleration or via a small charging device, such as the DC/DC converter. The third source of electrical energy V3 is connected to the electrical system by second switch S2, which should be a relay or a MOSFET switch.

Cycling batteries, such as Li-ion, NiMh batteries or other, have much higher capability to handle energy throughput than traditional lead acid batteries. The aim hereof is thus to significantly reduce the energy throughput on the primary battery V1, especially when this is a lead acid battery, by using in parallel therewith a third source of electrical energy V3, which is a cycling battery, which is used to supply electrical loads Z of the vehicle when the alternator A is shut down.

The third source of electrical energy V3 is arranged to be charged by the alternator A with energy recovered during vehicle deceleration or by a small charging device, such as the DC/DC converter, when necessary. The third source of electrical energy V3 will be connected to the electrical system by second switch S2, i.e. a relay- or a MOSFET switch that also enables control of the charge and discharge of energy.

One problem solved hereby is that the third source of electrical energy V3 may be charged by the alternator A during vehicle retardation when the alternator voltage is increased. Normally a high power charging device, DC/DC or similar, would be used to control the charging of the third source of electrical energy V3.

In accordance with the proposed solution the power of the charging DC/DC may be significantly reduced since the main charging for the third source of electrical energy V3 comes from the alternator A. As mentioned earlier the DC/DC converter may be removed (not shown), if for example, as the third source of electrical energy V3 a Li-Ion chemistry with suitable voltage characteristics and low internal resistance is used. Thus leaving charging of the third source of electrical energy V3 to be done by the alternator A only.

In accordance with the figure 2 embodiment, when the alternator A is shut down during combustion engine standby (stop phase in start/stop applications at standstill or in speed) the third source of electrical energy V3 is connected by second switch S2 in parallel with the secondary battery V2, which will perform the role of a consumption battery, and will thus supply the electrical system with current. This may be achieved through choosing a third source of electrical energy V3 with a higher open circuit voltage than the secondary battery V2.

Furthermore, the weight of the electrical power supply of the vehicle may be reduced, as compared to prior art solutions, since the secondary battery V2 may be low size. Also, the redundancy feedings for loads in the electrical system will be significantly improved.

The arrangement will also enable engine and alternator A shut down during driving in speed.

The same arrangement may be used in trucks and buses. The arrangement may be scaled through adding cells to the cycling battery to handle 24V, 48V or any higher voltage.

It should be noted that both the first switch S1 and the second switch S2 as well as the redundancy diode D1 arranged in parallel with the first switch S1 are symbolic to illustrate the functionality. In an implementation of the proposed arrangements it is proposed to use software controlled MOSFET switches for both the first switch S1 and the second switch S2.

The present application also provides a method for improving the performance of an electrical system of a vehicle having an internal combustion engine provided with a start/stop system. The electrical system further comprises a primary battery V1 which is selectively connectible to a starter motor S for the internal combustion engine via a starter solenoid SS. An alternator A and additional vehicle electrical loads Z are arranged in parallel with each other and selectively connectible in parallel with the primary battery V1 via a first switch S1. The method comprises the steps of: arranging in parallel with the alternator A a DC/DC converter; and arranging said DC/DC converter for selectively charging a third source of electrical energy V3, which third source of electrical energy V3 is selectively connectible in parallel with the alternator A via a second switch S2.

In one embodiment of the method it comprises the further step of arranging as the third source of electrical energy V3 a super capacitor.

In an alternative embodiment of the method it comprises the further step of arranging as the third source of electrical energy V3 a lithium ion battery.

In a yet further embodiment of the method it comprises the further step of arranging a secondary battery V2 in parallel with the alternator A.

In the following will be described some use cases illustrating use of the arrangement in accordance with the figure 1 embodiment.

In a first use case it is assumed that the vehicle is parked. The primary battery V1 will supply electrical loads Z of the vehicle. The third source of electrical energy V3, or cycling battery, is not used and both the first switch S1 and the second switch S2 are closed.

In a second use case it is assumed that the vehicle is used in an accessory mode, where the combustion engine is not running. The primary battery V1 will supply electrical loads Z of the vehicle. The third source of electrical energy V3, or cycling battery, is not used and the first switch S1 is closed while the second switch S2 is open.

In a third use case it is assumed that the vehicle is in use during combustion engine cranking. The primary battery V1 will supply electrical loads Z of the vehicle and the starter S, or alternatively only the starter S. The third source of electrical energy V3, or cycling battery, is not used, or alternatively used to supply electrical loads Z of the vehicle. The first S1 and second S2 switches are open or closed respectively, depending on the chosen solution.

In a fourth use case it is assumed that the vehicle is in use in a driving mode with the combustion engine running. With "driving mode" is to be understood a mode including the vehicle being driven at speed. The primary battery V1 will supply electrical loads Z of the vehicle. The third source of electrical energy V3, or cycling battery, is being charged by the alternator A or the DC/DC converter, and further functions as redundancy supply for electrical loads Z of the vehicle and provide low voltage protection at high transient current consumption. The first switch S1 will be closed and the second switch S2 will be closed during vehicle retardation in order to charge free energy into the third source of electrical energy V3 when the alternator voltage is increased or at transients as support for electrical loads Z of the vehicle.

In a fifth use case it is assumed that the vehicle is in use in a driving mode with the combustion engine in standby during a start/stop event. According to the invention, in this fifth use case the primary battery V1 will provide redundancy supply for electrical loads Z of the vehicle. The third source of electrical energy V3, or cycling battery, will provide primary supply for electrical loads Z of the vehicle, due to the fact that it has a higher open circuit voltage than the primary battery, especially when the primary battery V1 is a lead-acid battery. Both the first switch S1 and the second switch S2 are closed.

In a sixth use case it is assumed that the vehicle is in use in a driving mode with the combustion engine in standby during combustion engine cranking for warm start. The primary battery V1 will provide supply for the starter motor. The third source of electrical energy V3, or cycling battery, will provide supply for electrical loads Z of the vehicle. The first switch S1 is open while the second switch S2 is closed.

In the following will be described some use cases illustrating use of the arrangement in accordance with the figure 2 embodiment.

In a seventh use case it is assumed that the vehicle is parked. The primary battery V1 is not used. The secondary battery V2 will supply electrical loads Z of the vehicle. The third source of electrical energy V3, or cycling battery, is not used and both the first switch S1 and the second switch S2 are open.

In an eight use case it is assumed that the vehicle is used in an accessory mode, where the combustion engine is not running. The primary battery V1 is not used. The secondary battery V2 will supply electrical loads Z of the vehicle. The third source of electrical energy V3, or cycling battery, is not used and the first S1 and second S2 switches are open.

In a ninth use case it is assumed that the vehicle is in use during combustion engine cranking. The primary battery V1 will supply the starter. The secondary battery V2 will supply electrical loads Z of the vehicle. The third source of electrical energy V3, or cycling battery, is not used and both the first switch S1 and the second switch S2 are open.

In a tenth use case it is assumed that the vehicle is in use in a driving mode with the combustion engine running. The primary battery V1 will be charged by the alternator A and provide redundancy supply for electrical loads Z of the vehicle and provide low voltage protection at high transient current consumption. The secondary battery V2 will supply electrical loads Z of the vehicle. The third source of electrical energy V3, or cycling battery, is being charged by the alternator A or the DC/DC converter, and further functions as redundancy supply for electrical loads Z of the vehicle and provide low voltage protection at high transient current consumption. The first switch S1 will be closed for a specified time period to charge the primary battery V1 or at transient support for loads, and the second switch S2 will be closed during vehicle retardation in order to charge free energy into the third source of electrical energy V3 when the alternator voltage is increased or at transients as support for electrical loads Z of the vehicle.

In an eleventh use case it is assumed that the vehicle is in use in a driving mode with the combustion engine in standby during a start/stop event. According to the invention, in this eleventh use case, the primary battery V1 will provide redundancy supply for electrical loads Z of the vehicle. The secondary battery V2 will provide redundancy supply for electrical loads Z of the vehicle at high transient current consumption.

The third source of electrical energy V3, or cycling battery, will provide primary supply for electrical loads Z of the vehicle, due to the fact that it has a higher open circuit voltage than the primary battery V1, especially when the primary battery V1 is a lead-acid battery.

The first switch S1 is open and the second switch S2 is closed.

In a twelfth use case it is assumed that the vehicle is in use in a driving mode with the combustion engine in standby during combustion engine cranking for warm start. According to the invention, in this twelfth use case, the primary battery V1 will provide supply for the starter motor S. The secondary battery V2 will provide redundancy supply for electrical loads Z of the vehicle at high transient current consumption. The third source of electrical energy V3, or cycling battery, will provide primary supply for electrical loads Z of the vehicle, due to the fact that it has a higher open circuit voltage than the primary battery V1, especially when the primary battery V1 is a lead-acid battery. The first switch S1 is open while the second switch S2 is closed.

In accordance with the present application is also envisaged a vehicle comprising an arrangement as described above.

The above-described embodiments may be varied within the scope of the following claims.

Thus, while there have been shown and described and pointed out fundamental novel features of the embodiments herein, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are equivalent.

Moreover, it should be recognized that structures and/or elements and/or method steps shown and/or described in connection with any disclosed form or embodiment herein may be incorporated in any other disclosed or described or suggested form or embodiment as a general matter of design choice.

## Claims

1. An arrangement for improving the performance of an electrical system of a vehicle having an internal combustion engine provided with a start/stop system, the electrical system further comprising a primary battery (V1) which is selectively connectible to a starter motor (S) for the internal combustion engine via a starter solenoid (SS),
an alternator (A) and additional vehicle electrical loads (Z) arranged in parallel with each other and selectively connectible in parallel with the primary battery (V1) via a first switch (S1), **characterized in that**:
it further comprises a third source of electrical energy (V3) having a higher open circuit voltage than the primary battery (V1), which third source of electrical energy (V3) is selectively connectible in parallel with the alternator (A) via a second switch (S2).

2. An arrangement according to claim 1, **characterized in that** in parallel with the alternator (A) is further arranged a DC/DC converter (DC/DC), which DC/DC converter (DC/DC) is arranged for selectively charging the third source of electrical energy (V3).

3. An arrangement according to any one of claims 1 to 2, **characterized in that** the third source of electrical energy (V3) is a super capacitor.

4. An arrangement according to any one of claims 1 to 2, **characterized in that** the third source of electrical energy (V3) is a lithium ion battery.

5. An arrangement according to any one of claims 1 to 4, **characterized in that** a secondary battery (V2) is arranged in parallel with the alternator (A).

6. A method for improving the performance of an electrical system of a vehicle having an internal combustion engine provided with a start/stop system, the electrical system further comprising a primary battery (V1) which is selectively connectible to a starter motor (S) for the internal combustion engine via a starter solenoid (SS),
an alternator (A) and additional vehicle electrical loads (Z) arranged in parallel with each other and selectively connectible in parallel with the primary battery (V1) via a first switch (S1), **characterized in that** it comprises the steps of:
arranging a third source of electrical energy (V3) having a higher open circuit voltage than the primary battery (V1), such that the third source of electrical energy (V3) is selectively connectible in parallel with the alternator (A) via a second switch (S2).

7. A method according to claim 6, **characterized in that** it further comprises the steps of arranging in parallel with the alternator (A) a DC/DC converter (DC/DC), and arranging said DC/DC converter (DC/DC) for selectively charging the third source of electrical energy (V3).

8. A method according to any one of claims 6 to 7, **characterized in that** it further comprises the step of arranging as the third source of electrical energy (V3) a super capacitor.

9. A method according to any one of claims 6 to 7, **characterized in that** it further comprises the step of arranging as the third source of electrical energy (V3) a lithium ion battery.

10. A method according to any one of claims 6 to 9, **characterized in that** it further comprises the step of arranging a secondary battery (V2) in parallel with the alternator (A).

11. A vehicle **characterized in that** it comprises an arrangement according to any one of claims 1 to 5.

## Patentansprüche

1. Anordnung zum Verbessern der Leistungsfähigkeit eines elektrischen Systems eines Fahrzeugs, das einen Verbrennungsmotor aufweist, der mit einem Start/Stopp-System bereitgestellt wird, wobei das elektrische System außerdem eine Primärbatterie (V1), die über ein Magnetventil des Anlassers (SS) selektiv an einen Startermotor (S) für den Verbrennungsmotor anschließbar ist, eine Lichtmaschine (A) und zusätzliche elektrische Fahrzeuglasten (Z) umfasst, die parallel zueinander angeordnet sind und die über einen ersten Schalter (S1) selektiv parallel zur Primärbatterie (VI) anschließbar sind, **dadurch gekennzeichnet, dass** es außerdem eine dritte Quelle elektrischer Energie (V3) umfasst, die eine größere Leerlaufspannung als die Primärbatterie (V1) aufweist, wobei die dritte Quelle elektrischer Energie (V3) über einen zweiten Schalter (S2) selektiv parallel zur Lichtmaschine (A) anschließbar ist.

2. Anordnung nach Anspruch 1, **dadurch gekennzeichnet, dass** parallel zur Lichtmaschine (A) außerdem ein DC/DC-Wandler (DC/DC) angeordnet ist, wobei der DC/DC-Wandler (DC/DC) angeordnet ist, um die dritte Quelle elektrischer Energie (V3) selektiv zu laden.

3. Anordnung nach einem der Ansprüche 1 bis 2, **dadurch gekennzeichnet, dass** die dritte Quelle elektrischer Energie (V3) ein Superkondensator ist.

4. Anordnung nach einem der Ansprüche 1 bis 2, **dadurch gekennzeichnet, dass** die dritte Quelle elektrischer Energie (V3) eine Lithiumionenbatterie ist.

5. Anordnung nach einem der Ansprüche 1 bis 4, **dadurch gekennzeichnet, dass** eine Sekundärbatterie (V2) parallel zur Lichtmaschine (A) angeordnet ist.

6. Verfahren zum Verbessern der Leistungsfähigkeit eines elektrischen Systems eines Fahrzeugs, das einen Verbrennungsmotor aufweist, der mit einem Start/Stopp-System bereitgestellt wird, wobei das elektrische System außerdem eine Primärbatterie (V1), die über ein Magnetventil des Anlassers (SS) selektiv an einen Startermotor (S) für den Verbrennungsmotor anschließbar ist, eine Lichtmaschine (A) und zusätzliche elektrische Fahrzeuglasten (Z) umfasst, die parallel zueinander angeordnet sind und die über einen ersten Schalter (S1) selektiv parallel zur Primärbatterie (VI) anschließbar sind, **dadurch gekennzeichnet, dass** es außerdem die folgenden Schritte umfasst:
Anordnen einer dritten Quelle elektrischer Energie (V3), die eine größere Leerlaufspannung als die Primärbatterie (V1) aufweist, sodass die dritte Quelle elektrischer Energie (V3) über einen zweiten Schalter (S2) selektiv parallel zur Lichtmaschine (A) anschließbar ist.

7. Verfahren nach Anspruch 6, **dadurch gekennzeichnet, dass** es außerdem die folgenden Schritte umfasst: Anordnen eines DC/DC-Wandlers (DC/DC) parallel zu der Lichtmaschine (A), und Anordnen des DC/DC-Wandlers (DC/DC) zum selektiven Laden der dritten Quelle elektrischer Energie (V3).

8. Verfahren nach einem der Ansprüche 6 bis 7, **dadurch gekennzeichnet, dass** es außerdem den Schritt des Anordnens eines Superkondensators als dritte Quelle elektrischer Energie (V3) umfasst.

9. Verfahren nach einem der Ansprüche 6 bis 7, **dadurch gekennzeichnet, dass** es außerdem den Schritt des Anordnens einer Lithiumionenbatterie als dritte Quelle elektrischer Energie (V3) umfasst.

10. Verfahren nach einem der Ansprüche 6 bis 9, **dadurch gekennzeichnet, dass** es außerdem den Schritt des Anordnens einer Sekundärbatterie (V2) parallel zur Lichtmaschine (A) umfasst.

11. Fahrzeug, **dadurch gekennzeichnet, dass** es eine Anordnung nach einem der Ansprüche 1 bis 5 umfasst.

## Revendications

1. Agencement pour améliorer les performances d'un système électrique d'un véhicule doté d'un moteur à combustion interne muni d'un système démarrage/arrêt, le système électrique comportant en outre une batterie primaire (V1) qui peut être connectée sélectivement à un démarreur (S) pour le moteur à combustion interne via un solénoïde de démarreur (SS), un alternateur (A) et des charges électriques supplémentaires (Z) du véhicule disposées en parallèle entre elles et pouvant être connectées sélectivement en parallèle avec la batterie primaire (V1) via un premier interrupteur (S1), **caractérisé en ce que** :
il comporte en outre une troisième source d'énergie électrique (V3) présentant une tension en circuit ouvert supérieure à celle de la batterie primaire (V1), ladite troisième source d'énergie électrique (V3) pouvant être connectée sélectivement en parallèle avec l'alternateur (A) via un deuxième interrupteur (S2).

2. Agencement selon la revendication 1, **caractérisé en ce qu'**un convertisseur continu-continu (DC/DC) est en outre disposé en parallèle avec l'alternateur (A), ledit convertisseur continu-continu (DC/DC) étant disposé de façon à charger sélectivement la troisième source d'énergie électrique (V3).

3. Agencement selon l'une quelconque des revendications 1 à 2, **caractérisé en ce que** la troisième source d'énergie électrique (V3) est un supercondensateur.

4. Agencement selon l'une quelconque des revendications 1 à 2, **caractérisé en ce que** la troisième source d'énergie électrique (V3) est une batterie lithium-ion.

5. Agencement selon l'une quelconque des revendications 1 à 4, **caractérisé en ce qu'**une batterie secondaire (V2) est disposée en parallèle avec l'alternateur (A).

6. Procédé pour améliorer les performances d'un système électrique d'un véhicule doté d'un moteur à combustion interne muni d'un système démarrage/arrêt, le système électrique comportant en outre une batterie primaire (V1) qui peut être connectée sélectivement à un démarreur (S) pour le moteur à combustion interne via un solénoïde de démarreur (SS), un alternateur (A) et des charges électriques supplémentaires (Z) du véhicule disposées en parallèle entre elles et pouvant être connectées sélectivement en parallèle avec la batterie primaire (V1) via un premier interrupteur (S1), **caractérisé en ce qu'**il comporte les étapes consistant à :
disposer une troisième source d'énergie électrique (V3) présentant une tension en circuit ouvert supérieure à celle de la batterie primaire (V1), de telle façon que la troisième source d'énergie électrique (V3) puisse être connectée sélectivement en parallèle avec l'alternateur (A) via un deuxième interrupteur (S2).

7. Procédé selon la revendication 6, **caractérisé en ce qu'**il comporte en outre les étapes consistant à disposer en parallèle avec l'alternateur (A) un convertisseur continu-continu (DC/DC), et à disposer ledit convertisseur continu-continu (DC/DC) de façon à charger sélectivement la troisième source d'énergie électrique (V3) .

8. Procédé selon l'une quelconque des revendications 6 à 7, **caractérisé en ce qu'**il comporte en outre l'étape consistant à disposer, en tant que troisième source d'énergie électrique (V3), un supercondensateur.

9. Procédé selon l'une quelconque des revendications 6 à 7, **caractérisé en ce qu'**il comporte en outre l'étape consistant à disposer, en tant que troisième source d'énergie électrique (V3), une batterie lithium-ion.

10. Procédé selon l'une quelconque des revendications 6 à 9, **caractérisé en ce qu'**il comporte en outre l'étape consistant à disposer une batterie secondaire (V2) en parallèle avec l'alternateur (A).

11. Véhicule **caractérisé en ce qu'**il comporte un agencement selon l'une quelconque des revendications 1 à 5.
